# EUROPÄISCHE PATENTANMELDUNG

(11) **EP 1 090 831 A2**
(43) Veröffentlichungstag der Anmeldung: **11.04.2001**
(21) Anmeldenummer: 00120805.7
(22) Anmeldetag: 23.09.2000
(51) Int. Cl.: B62D 35/00

(54) **Spoilermechanismus**

(30) Priorität: 05.10.1999 DE 29917511 U
(71) Anmelder: REHAU AG + Co, 95111 Rehau (DE)
(72) Erfinder: Orlogi, Harald, 95111 Rehau (DE)

(57) **Zusammenfassung**

Die Erfindung betrifft eine Vorrichtung zur Verwendung an einem Fahrzeug, wobei die Vorrichtung aus einem flächigen Element, wenigstens einer Achse, Befestigungselementen und Federelementen besteht und wobei das flächige Element so dimensioniert und angeordnet ist, dass es den beim Fortbewegen des Fahrzeuges wirkenden Kräften wenigstens teilweise ausgesetzt ist.
Die Erfindung hat sich die Aufgabe gestellt, die Nachteile des Standes der Technik dahingehend zu vermeiden und eine Vorrichtung aufzuzeigen, die die aerodynamischen Eigenschaften beim Fortbewegen eines Fahrzeuges verbessert, in dem die Luftverwirbelungen reduziert, die Fahrstabilität erhöht und eine Treibstoffeinsparung erzielt wird. Weiterhin soll eine gezielte und direkt dosierbare Luftführung für bestimmte Bereiche des Fahrzeuges in Abhängigkeit von der Fahrgeschwindigkeit ermöglicht werden und ein einfacher Aufbau, eine wirtschaftliche Herstellbarkeit und eine problemlose Montierbarkeit gewährleistet werden.
Dies wird dadurch gelöst, dass das flächige Element im Ruhezustand des Fahrzeuges durch wenigstens einen unter Vorspannung stehendes Federelement an dem kommunizierenden Element des Fahrzeuges anliegt, dass das flächige Element um die Achse drehbeweglich gelagert ist, dass das der Achse gegenüberliegende freie Ende des flächigen Elementes von dem kommunizierenden Element des Fahrzeuges beabstandet ist, dass sich das flächige Element entsprechend der Krafteinwirkung beim Fortbewegen des Fahrzeuges um die Achse dreht und in einem definierten Winkel vom kommunizierenden Element des Fahrzeuges absteht.

## Beschreibung

Die Erfindung betrifft eine Vorrichtung zur Verwendung an einem Fahrzeug, wobei die Vorrichtung aus einem flächigen Element, wenigstens einer Achse, Befestigungselementen und Federelementen besteht und wobei das flächige Element so dimensioniert und angeordnet ist, daß es den beim Fortbewegen des Fahrzeuges wirkenden Kräften wenigstens teilweise ausgesetzt ist.

Der Fondbereich von Fahrzeugen, speziell von Automobilen, ist mit Öffnungen versehen, die für Luftführungen und Temperierungen vorgesehen sind, wie z. B. Öffnungen für das Kühlsystem bzw. Öffnungen für die Bremssysteme. Diese Öffnungen beeinflussen unmittelbar die aerodynamischen Eigenschaften des Fahrzeuges und stellen zum anderen Beeinträchtigungen für die Gestaltung des Designs der Fahrzeuge dar.
Durch das Fortbewegen der Fahrzeuge entsteht bei jeder Geschwindigkeit ein Luftstrom, welcher auf den Frontbereich trifft, dort oberhalb bzw. unterhalb des Fahrzeuges entlang zieht und in bestimmten Bereichen wie z. B. in Öffnungen oder an den Rädern zu Luftverwirbelungen führt, welche sich nachteilig auf den Verbrauch von Treibstoffen und ggf. auf die Fahrstabilität auswirken.
Diese technischen für die Funktionsfähigkeit des Fahrzeuges notwendigen Öffnungen sind jedoch bei jeder Geschwindigkeit des Fahrzeuges offen und bieten so einen Luftwiderstand und führen zu nachteiligen Verwirbelungen in Abhängigkeit von der Geschwindigkeit des Fahrzeuges.

Um diese Luftverwirbelungen zu reduzieren, werden an den Fahrzeugen fest angeformte Teile vorgesehen, welche allgemein als Spoiler bezeichnet werden, die jedoch mit dem Nachteil behaftet sind, daß die Bodenfreiheit des Fahrzeuges nicht immer gegeben ist, so daß beispielsweise bei Bodenwellen bzw. Bordsteinen die Gefahr der Zerstörung dieser Spoiler vakant ist. Ein weiteres Problem wird darin gesehen, daß die Gestaltungsfreiheit der Designer bei derart feststehenden Spoilern erheblich eingeschränkt ist.

Ein weiterer, jedoch gravierender Nachteil besteht darin, daß die Funktion dieser Spoiler, welche in der Einflußnahme auf die aerodynamischen Eigenschaften des Fahrzeuges besteht, erst bei höheren Geschwindigkeiten wirksam werden kann, das optische Erscheinungsbild des Fahrzeuges durch diese Spoiler jedoch im Ruhezustand entscheidend geprägt sind.

Weiter sind aus dem Stand der Technik Möglichkeiten bekannt, die Funktion eines derartigen Spoilers zur Beeinflussung der aerodynamischen Eigenschaften durch das Absenken der gesamten Karosserie des Fahrzeuges über eine geeignete Steuer- und Regeltechnik zu gewährleisten. Hierzu sind jedoch zusätzliche Aufwendungen am Fahrzeug notwendig, da nicht nur die Steuer- und Regelungstechnik, sondern auch die mechanischen Voraussetzungen für eine derartige Veränderung der gesamten Fahrzeugkarosserie geschaffen werden müssen.
Für derartige Beeinflussungen der aerodynamischen Eigenschaften ist es im Stand der Technik immer erforderlich, zusätzliche Steuer- und Regeltechnik sowie zusätzliche mechanische und/oder elektrische Komponenten einzusetzen, die jedoch die Gesamtkosten des Fahrzeuges negativ beeinflussen und ein negatives Preis-Leistungs-Verhältnis aufweisen.

Hier setzt die Erfindung ein, die es sich zur Aufgabe gestellt hat, die Nachteile des Standes der Technik dahingehend zu vermeiden und eine Vorrichtung aufzuzeigen, die die aerodynamischen Eigenschaften beim Fortbewegen eines Fahrzeuges verbessert, indem die Luftverwirbelungen reduziert, die Fahrstabilität erhöht und eine Treibstoffeinsparung erzielt wird.
Eine weitere Aufgabe besteht darin, eine gezielte und direkt dosierbare Luftführung für bestimmte Bereiche des Fahrzeuges in Abhängigkeit von der Fahrgeschwindigkeit zu ermöglichen und daß die Vorrichtung einfach aufgebaut, wirtschaftlich herstellbar und problemlos montierbar ist.

Dies wird dadurch gelöst, daß das flächige Element im Ruhezustand des Fahrzeuges durch wenigstens ein unter Vorspannung stehendes Federelement an dem kommunizierenden Element des Fahrzeuges anliegt, daß das flächige Element um die Achse drehbeweglich gelagert ist, daß das der Achse gegenüberliegende freie Ende des flächigen Elementes vom kommunizierenden Element des Fahrzeuges beabstandet ist, daß sich das flächige Element entsprechend der Krafteinwirkung beim Fortbewegen des Fahrzeuges um die Achse dreht und in einem definierten Winkel vom kommunizierenden Element des Fahrzeuges absteht.
Mit dieser erfindungsgemäßen Vorrichtung ist es möglich, die bisherigen Nachteile aus dem bekannten Stand der Technik zu vermeiden, da die Vorrichtung im Ruhezustand des Fahrzeuges bzw. bei niedrigen Geschwindigkeiten am kommunizierenden Element des Fahrzeuges anliegt und somit zum einen das Design und die optische Erscheinung des Fahrzeuges nicht beeinträchtigt und zum andern auch zu keinen Problemen bezüglich der Bodenfreiheit des Fahrzeuges führt.

Durch das unter Vorspannung stehende Federelement und die Geometrie des flächigen Elementes ist eine exakte Dimensionierung und Definition der Geschwindigkeit möglich, bei der der Luftstrom der an dem vom kommunizierenden Element des Fahrzeuges abstehenden freien Ende des flächigen Elementes angreift, die Kraft des unter Vorspannung stehenden Federelementes überwindet und sich die Vorrichtung beginnt um die Achse zu drehen und so die aerodynamischen Eigenschaften des Fahrzeuges zu beeinflussen. Sollte das Fahrzeug abgebremst bzw. die Kraft des Luftstromes nachlassen, bewegt sich die erfindungsgemäße Vorrichtung automatisch wieder in Richtung des kommunizierenden Elements des Fahrzeuges.

Ein weiterer Vorteil der erfindungsgemäßen Vorrichtung wird darin gesehen, daß ab einer bestimmten Kraft des Luftstromes, welcher äquivalent zu einer bestimmten Geschwindigkeit des Fahrzeuges ist, die Drehbewegung der erfindungsgemäßen Vorrichtung gestoppt wird, da zum einen die Wirkung ab Überschreiten eines bestimmten Winkels nicht mehr gewährleistet ist und zum andern bei der Verwendung der erfindungsgemäßen Vorrichtung im Zusammenhang mit den Rädern des Fahrzeuges es zu einer Zerstörung der Vorrichtung bzw. zu Beschädigungen am Reifen des Fahrzeuges kommen kann. Dazu ist wenigstens ein Arretierelement vorhanden, welches die Drehbewegung begrenzt.

Dieses Arretierelement kann zum einen an der erfindungsgemäßen Vorrichtung selbst befestigt sein, zum anderen kann in einer weiteren vorteilhaften Ausführungsform das Arretierelement am kommunizierenden Element des Fahrzeuges befestigt sein.

Da die erfindungsgemäße Vorrichtung sehr einfach im Aufbau und wirtschaftlich herstellbar ist, kann sie auch jederzeit an bereits existierende Fahrzeuge in den betroffenen Bereichen nachgerüstet werden.
Ein weiterer Vorteil wird darin gesehen, daß für die erfindungsgemäße Vorrichtung keine zusätzliche Steuer- und Regeltechnik sowie weitere kostentreibende mechanische Elemente notwendig sind, sondern daß diese entsprechend dem tatsächlichen Krafteinwirken beim Fortbewegen des Fahrzeuges funktioniert.

Die erfindungsgemäße Vorrichtung kann vorteilhafterweise an der Unterseite eines Stoßfängers eines Fahrzeugs befestigt sein und somit die Luftverwirbelungen beeinflussen, die beim Fortbewegen des Fahrzeuges im Radhaus entstehen. Hierdurch kann der Luftwiderstand bei der Fortbewegung des Fahrzeuges reduziert werden, so daß weniger Energie benötigt wird, das Fahrzeug zu bewegen, was einer Einsparung von Treibstoff äquivalent ist. Weiterhin kann durch die Reduzierung bzw. Beseitigung derartiger Luftverwirbelungen die Fahrstabilität bei den entsprechenden Geschwindigkeiten erhöht werden.

Durch den Einsatz der erfindungsgemäßen Vorrichtung an der Öffnung eines Kühlsystems des Fahrzeuges kann einerseits die Öffnung verdeckt sein, so daß die optische Erscheinung des Fahrzeuges gefälliger wirkt und zum anderen kann durch die erfindungsgemäße Vorrichtung gezielt und direkt dosierbar die Luft zu den Bereichen im Fahrzeug geführt werden, die diese bei den gefahrenen Geschwindigkeiten benötigen.

Dies ist auch in einer weiteren Ausführungsform gegeben, in der die erfindungsgemäße Vorrichtung vor der Öffnung des Bremssystemes des Fahrzeuges positioniert wird.

Im folgenden soll an dem die Erfindung nicht beschränkenden Figuren diese näher erläutert werden.

Es zeigen:
- Figur 1: Schnittdarstellung durch eine erfindungsgemäße Vorrichtung
- Figur 2: Schnittdarstellung durch eine erfindungsgemäße Vorrichtung bei einer Krafteinwirkung durch einen Luftstrom

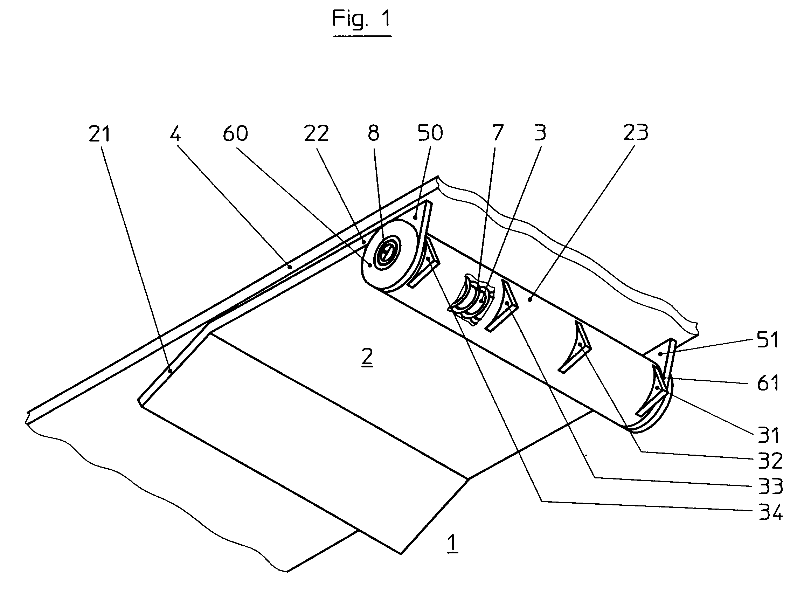

In Figur 1 ist die erfindungsgemäße Vorrichtung 1 ohne ein Fahrzeug dargestellt. Am kommunizierenden Element 4 des Fahrzeuges liegt das flächige Element 2 an, wobei das freie Ende 21 des flächigen Elementes 2 vom kommunizierenden Element 4 des Fahrzeuges beabstandet ist.
In der hier dargestellten Ausführungsform ist an dem anderen freien Ende 22 des flächigen Elementes 2 ein Aufnahmeelement 23 einstückig angeformt. Dieses Aufnahmeelement 23 befindet sich zwischen den Befestigungselementen 50, 51, welche am kommunizierenden Element 4 befestigt sind. Im Inneren des Aufnahmeelementes 23 befindet sich die Achse 3 und zwischen der Achse 3 und der Innenwand des Aufnahmeelementes 23 das Federelement 7. Das Aufnahmeelement 23 wird an seinen freien Enden durch die Verschlußelemente 60, 61 abgedeckt, die mittels Formschluß mit den Abstützelementen 50, 51 verdrehsicher verbunden sind. In der hier dargestellten Ausführungsform wird der Festsitz der Verschlußelemente 60, 61 auf der Achse 3 durch ein Befestigungselement 8 realisiert. An der Außenseite des Aufnahmeelementes 23 sind Arretierelemente 31, 32, 33, 34 einstückig angeformt.

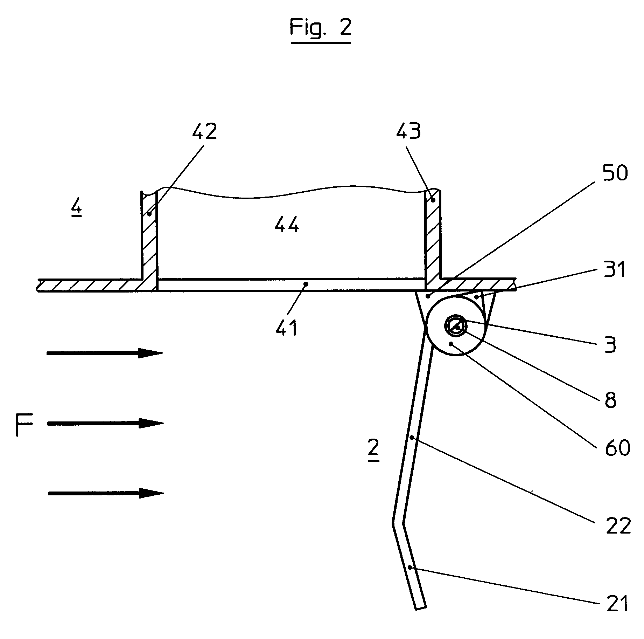

Bei der in Figur 2 dargestellten Ausführungsform der erfindungsgemäßen Vorrichtung 1 ist das kommunizierende Element 4 des Fahrzeuges durch eine Öffnung 41 charakterisiert, welche von den Wänden 42, 43, 44 umgeben ist und einen Luftführungskanal zum Kühlsystem des Fahrzeuges darstellt. Durch die Einwirkung des Luftstromes mit einer definierten Kraft F auf das freie Ende 21 des flächigen Elementes 2 dreht sich das flächige Element 2 um die Achse 3, so daß der Luftstrom auf die freien Enden 21, 22 des flächigen Elementes 2 trifft und von dort über die Öffnung 41 in den Luftführungskanal des Fahrzeuges geführt werden kann. Am freien Ende 21 des flächigen Elementes 2 kommt es zu einem Abriß des Luftstromes, so daß hier keine unerwünschten Luftverwirbelungen auftreten.

In diesem Ausführungsbeispiel wird die Drehbewegung der erfindungsgemäßen Vorrichtung 1 durch ein Arretierelement 31 gestoppt, welches an der Unterseite des kommunizierenden Elementes 4 des Fahrzeuges anschlägt. In einer weiteren Ausführungsform der erfindungsgemäßen Vorrichtung 1 ist es möglich, durch Lösen des Befestigungselementes 8 das Abdeckelement 60 so zu verstellen, daß damit die Vorspannung des hier nicht dargestellten Federelementes 7 variiert werden kann. Dazu ist die Innenseite des Abdeckelementes 60 und die Außenseite des Halteelementes 50 derart ausgestaltet, daß beispielsweise über eingebrachte kommunizierende Wellenberge und Wellentäler eine sichere Positionierung des Abdeckelementes 60 am Halteelement 50 verdrehsicher erfolgen kann, welche durch das Befestigungselement 8 fixiert wird.

## Patentansprüche

1. Vorrichtung zur Verwendung an einem Fahrzeug, wobei die Vorrichtung aus einem flächigen Element, wenigstens einer Achse, Befestigungselementen und Federelementen besteht und wobei das flächige Element so dimensioniert und angeordnet ist, daß es den beim Fortbewegen des Fahrzeug wirkenden Kräften wenigstens teilweise ausgesetzt ist,
dadurch gekennzeichnet,
daß das flächige Element (2) im Ruhezustand des Fahrzeuges durch wenigstens ein unter Vorspannung stehendes Federelement (7) an dem kommunizierenden Element (4) des Fahrzeuges anliegt, daß das flächige Element (2) um die Achse (3) drehbeweglich gelagert ist, daß das der Achse (3) gegenüberliegende freie Ende (21) des flächigen Elementes (2) von dem kommunizierenden Element (4) des Fahrzeuges beabstandet ist, daß sich das flächige Element (2) entsprechend der Krafteinwirkung beim Fortbewegen des Fahrzeuges um die Achse (3) dreht und in einem definierten Winkel vom kommunizierenden Element (4) des Fahrzeuges absteht.

2. Vorrichtung nach Anspruch 1, dadurch gekennzeichnet, daß die Drehbewegung des flächigen Elementes (2) durch wenigstens ein Arretierelement (31) begrenzt ist.

3. Vorrichtung nach einem der vorhergehenden Ansprüche, dadurch gekennzeichnet, daß das Arretierelement (31) an dem flächigen Element (2) angebracht ist.

4. Vorrichtung nach einem der vorhergehenden Ansprüche, dadurch gekennzeichnet, daß das Arretierelement (31) am kommunizierenden Element (4) des Fahrzeuges angebracht ist.

5. Vorrichtung nach einem der vorhergehenden Ansprüche, dadurch gekennzeichnet, daß das kommunizierende Element (4) des Fahrzeuges die Unterseite eines Stoßfängers ist.

6. Vorrichtung nach einem der vorhergehenden Ansprüche, dadurch gekennzeichnet, daß das kommunizierende Element (4) des Fahrzeuges eine Öffnung am Kühlsystem ist.

7. Vorrichtung nach einem der vorhergehenden Ansprüche, dadurch gekennzeichnet, daß das kommunizierende Element (4) des Fahrzeuges eine Öffnung am Bremssystem ist.
